# FASCICULE DE BREVET EUROPEEN

(11) **EP 1 626 415 B1**
(45) Date de publication et mention de la délivrance du brevet: **11.07.2012**
(21) Numéro de dépôt: 05291714.3
(22) Date de dépôt: 11.08.2005
(51) Int. Cl.: H01B 3/30, H01B 5/16

(54) **Réduction du bruit de lignes aériennes par gaine plastique**
Verminderung von Geräuschen von Überlandleitungen durch eine Plastikhülle
Noise reduction of overhead lines by a plastic sheath

(30) Priorité: 12.08.2004 FR 0408839
(43) Date de publication de la demande: 15.02.2006
(73) Titulaire: Electricité de France, 75008 Paris (FR)
(72) Inventeur: Riquel, Guy, 77690 Montigny-Sur-Loing (FR); Gayrard, Arnaud, 77130 La Grande Paroisse (FR)
(74) Mandataire: Texier, Christian

(56) Documents cités:
- FR-A- 2 485 792
- US-A- 4 358 637

## Description

L'invention concerne les conducteurs électriques aériens, notamment les conducteurs électriques à haute et très haute tension.

Plus particulièrement, l'invention concerne le bruit dégagé par ces conducteurs par temps de pluie, dû au franchissement d'un seuil de conductivité ou seuil d'ionisation de l'air, par le champ électrique à proximité du conducteur. Ce phénomène est connu sous le nom d'effet couronne.

On a proposé diverses approches pour réduire le bruit dû à l'effet couronne.

Ainsi, il a été proposé de revêtir le conducteur par une gaine en matière plastique lisse et semiconductrice afin d'augmenter le diamètre structurel de celui-ci, réduisant par là le gradient électrique en profil. Cette approche n'a pas donné satisfaction, bien que l'on ait pensé que le caractère lisse supprimerait les aspérités habituellement rencontrées sur les conducteurs, qui forment des concentrations de champs électriques favorables à l'apparition de l'effet couronne.

Dans une autre approche on a proposé de placer, sur un conducteur nu, une série de bracelets portant chacun une série de pointes conductrices s'étendant radialement. Ce dispositif, qui vise aussi à réduire le gradient électrique au pourtour du conducteur, s'est avéré insatisfaisant également.

Dans une autre approche encore, les documents FR 2 485 792 et US 4 358 637 proposent d'entourer un conducteur métallique avec un revêtement plastique constitué par un mélange comprenant au moins un composé conducteur et au moins un composé hydrophile.

Le but de l'invention est de proposer un moyen de réduire l'effet couronne de manière plus efficace que les dispositifs proposés jusqu'à présent.

Ce but est atteint selon l'invention grâce à un dispositif de réduction de l'effet couronne d'un conducteur aérien à haute ou très haute tension selon la revendication 1.

D'autres caractéristiques, buts et avantages de l'invention apparaîtront à la lecture de la description détaillée qui va suivre, faite en référence aux figures annexées sur lesquelles :
- la figure 1 est une vue en perspective d'un conducteur équipé d'une gaine selon une première variante de l'invention ;
- la figure 2 est une coupe transversale d'une gaine conforme à une seconde variante de l'invention ;

La gaine proposée dans la première variante a une périphérie continue autour d'un conducteur 10, mise en place préférentiellement par extrusion in situ.

Cette gaine 20 ou « coating » est de faible épaisseur, ici d'environ 2 mm, et en matériau thermo-plastique pour permettre l'extrusion.

On vise, par la faible épaisseur adoptée, notamment à limiter la surcharge imposée sur le conducteur (masse linéique et pression du vent). Le critère appliqué ici est que la masse linéique ne soit augmentée au maximum que de 10%.

Une certaine conductivité thermique est recherchée pour cette gaine.

En effet, on souhaite que celle-ci ne s'oppose pas à la dissipation de chaleur expressément souhaitée pour les conducteurs soumis de manière connue à l'effet Joule.

L'enrobage par gaine thermoplastique confère en outre, comme il a pu être constaté au cours des essais, une capacité de protection du conducteur contre les impacts directs de la foudre. La gaine thermoplastique améliore en outre les transferts thermiques. Une certaine conductivité électrique est également souhaitée. En effet une gaine parfaitement isolante risquerait, du fait d'un effet couronne résiduel, de faire l'objet d'une concentration de charges en surface externe de la gaine. Cette concentration aurait pour conséquence l'apparition de contraintes radiales susceptibles de perforer le matériau, et de telles perforations seraient particulièrement dommageables lorsque la gaine est de faible épaisseur comme c'est le cas ici.

C'est pourquoi on préconise avantageusement un matériau polymère conducteur, tel qu'un polyamide 6 conducteur.

De manière plus générale, on fera, sans difficulté, une sélection parmi les polyamides disponibles sur le marché pour relever, parmi ceux-ci, des polyamides à la mouillabilité adéquate. Ces polyamides, comme les autres matériaux plastiques préconisés, sont en outre préférentiellement équipés de particules conductrices pour présenter une conductibilité satisfaisante.

Ici, pour assurer une conductivité électrique suffisante, le présent matériau plastique est chargé en particules de carbone permettant de classer le matériau obtenu dans la catégorie « semi-conducteur ». Ce matériau en reste néanmoins constitué essentiellement du matériau plastique à la mouillabilité élevée.

Outre une diminution de l'effet couronne due à l'augmentation du diamètre de l'ensemble, le conducteur ainsi équipé inclut des caractéristiques propres que l'on décrira par la suite et qui le rendent particulièrement apte à réduire l'effet couronne.

Sa propriété essentielle pour cela est, comme on le décrira par la suite, sa mouillabilité ou hydrophilité, que l'on qualifiera ci-après en référence à quelques méthodes de mesures de mouillabilité.

Dans ce mode de réalisation, le matériau est extrudé en place directement sur le conducteur tendu. L'extrusion est ici effectuée en veillant à ce que l'état de surface périphérique de cette gaine 20 présente un caractère lisse. Ce caractère lisse favorise en soi un étalement adéquat des gouttes d'eau apparaissant sous pluie.

Le caractère lisse réduit en outre le gradient superficiel maximal, et limite l'accrochage de particules conductrices susceptibles de favoriser l'effet couronne.

En outre, la gaine n'est alors aucunement propice à l'apparition de manchons de givre ou de neige collante. En outre une gaine lisse facilite l'auto-nettoyage de celle-ci sous pluie.

Le PA6 conducteur utilisé présente ici une résistivité transversale qui est inférieure à 10³ ohm/cm. Outre son caractère hydrophile vérifiant les exigences propres à l'invention, qu'on chiffrera par la suite, la gaine 20 ainsi extrudée est légère et peu coûteuse.

Une telle gaine 20 présente en outre une faible prise au vent, permettant d'éviter, comme il se doit, l'apparition d'un bruit éolien.

Un caractère souple est préféré car il permet notamment d'absorber les contraintes des dilatations différentielles susceptibles d'apparaître dans celui-ci.

D'autres matériaux sont imminement susceptibles de vérifier ces différents critères, notamment le critère de mouillabilité qui sera exprimé ci-après.

Ainsi, on mentionnera ceux des polymères conducteurs extrudables, dont les valeurs de mouillabilité s'avèrent satisfaire, en général, à la mise en oeuvre de la présente invention.

Ces différents matériaux peuvent être mis en place sur des conducteurs haute ou très haute tension, respectivement à 225 kV ou à 400 kV selon la pratique française.

Parmi ces différents matériaux, on privilégie un matériau particulièrement résistant aux ultra-violets ainsi qu'à l'ozone généré par l'effet couronne résiduel. Il est en outre d'une bonne tenue à la température.

Les polymères sont en outre préférés pour leur résistance aux dépôts et leur aptitude à résister aux nettoyages.

Le caractère hydrophile que l'on a spécifié ci-avant en tant que caractère particulier pour la réduction de l'effet couronne peut se chiffrer de la façon suivante.

On connaît différentes façons de mesurer la mouillabilité ou hydrophilité d'un matériau.

On se réfèrera notamment à la spécification technique quant à la mise en oeuvre des méthodes de mesure de mouillabilité IEC/TS 62073. Cette spécification est disponible sur le site internet http:/domino.iec.ch/webstore/webstore.nsf.

On se référera notamment dans cette spécification technique à une méthode de mesure de la mouillabilité sur une échelle allant de 1 à 7 et notée «WC » (wettability class).

On se référera également, dans cette spécification ou dans d'autres références, à la mesure de l'angle au retrait (« receding contact angle ») d'une goutte formée à la surface du matériau.

On se référera en outre, si besoin, à la mesure de tension de surface du matériau concerné, habituellement chiffrée en mN/m. Ces trois critères sont sensiblement équivalents l'un à l'autre, bien que l'on préférera la méthode WC, plus représentative des qualités recherchées ici.

Selon que l'on mesure la mouillabilité avec l'une ou l'autre de ces méthodes, on recherche les critères suivants.

Sur l'échelle WC, la mouillabiité est ici choisie à WC=6 ou WC=7.

La tension de surface est, elle, préconisée comme étant supérieure à 60 mN/m.

L'angle de contact au retrait est, lui, préconisé comme étant inférieur à 10°.

La méthode « WC » est mise en oeuvre en vaporisant de l'eau pendant une courte durée à la surface du matériau avec une bouteille pulvérisatrice classique, sur une surface de 50 cm² à 100 cm², la pulvérisation étant forte à environ 25 cm pendant 20 à 30 secondes, c'est à dire pour une pulvérisation d'une quantité d'eau située entre 10 ml et 30 ml.

A peu près 10 secondes après la pulvérisation, on examine l'état de la surface du matériau, en particulier la forme des gouttelettes et le pourcentage de surface qui est mouillée.

Un critère WC = 6 est vérifié quand plus de 90% de la surface est couverte par l'eau.

Un critère WC = 7 est rencontré lorsque la surface est totalement recouverte par un film d'eau continu.

Une telle gaine permet donc de traiter efficacement les zones sujettes à des plaintes de riverains, typiquement sur quelques dizaines de mètres de conducteur, voire sur la longueur totale d'une portée ou de quelques portées. Une portée doit être comprise comme étant l'ensemble de l'étendue du conducteur entre deux pylônes.

Préférentiellement, la gaine recouvre le conducteur sur une longueur continue d'au moins 10 mètres, avantageusement de 40 à 400 mètres, très préférentiellement supérieure à 150m.

On entendra par caractère lisse un état de surface apparaissant lisse au toucher.

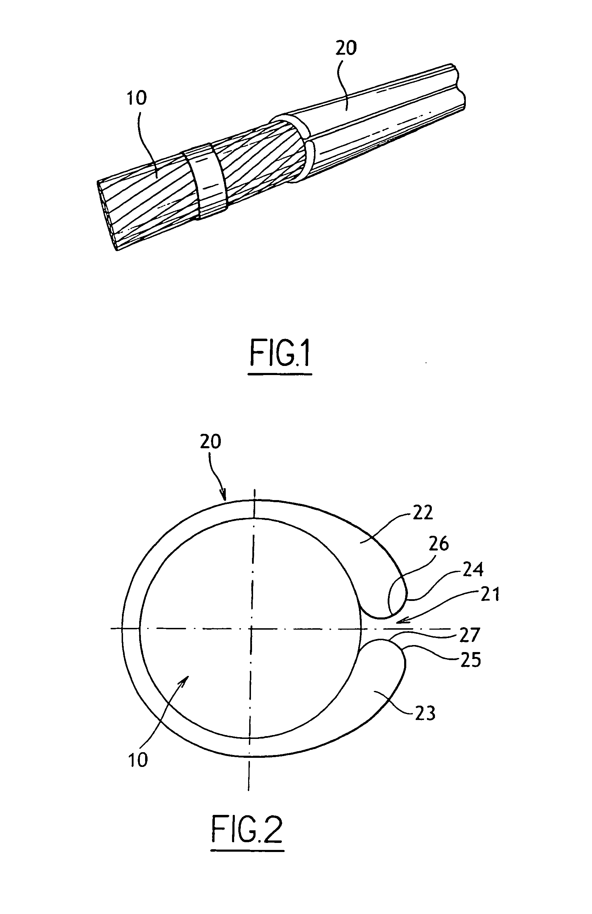

On décrira maintenant un second mode de réalisation en référence à la figure 2 où celui-ci est représenté en coupe transversale.

Dans cette variante, la gaine 20 présente une ouverture longitudinale 21 s'étendant sous la forme d'une fente. Ainsi la gaine 20 selon cette variante est prévue pour être mise en place sur un câble tendu, par écartement des deux côtés 22 et 23 de cette fente 21 puis par un éventuel retour élastique de la gaine en serrage autour du conducteur 10.

En d'autres termes, il s'agit d'un clipsage de la gaine 20 sur le conducteur 10. Cette variante est préférée dans le but de permettre une mise en place rapide, voire même une mise en place alors que le conducteur est sous tension.

Le profil transversal représenté sur la figure 2 comporte donc deux extrémités libres 22 et 23 formant les bordures de la fente. Ces deux bords libres se trouvent à une distance l'un de l'autre d'environ 2 mm.

La gaine 20 représentée est d'une épaisseur de 2 mm, pour un rayon de courbure externe de 13,2 cm et un rayon de courbure interne de 11,2 cm.

Au voisinage de la fente, les extrémités libres 22 et 23 forment chacune un élargissement 24 et 25 de manière à atteindre une épaisseur allant jusqu'à 4 mm à proximité de l'extrémité concernée.

Ces extrémités se terminent en outre chacune par un arrondi 26 et 27 en vis à vis dans la fente 21, de sorte que l'extrémité libre concernée ne présente aucune arête susceptible d'être le siège d'une concentration électrostatique propice à l'effet couronne. Cet arrondi 26, 27 vient notamment rejoindre le conducteur 10 selon la tangente au contour de ce dernier.

On adopte avantageusement pour cet arrondi 26, 27, un rayon de courbure de l'ordre d'au moins 2 cm, préférentiellement à 2,5 cm. Une telle valeur de rayon de courbure limite la formation de gouttelettes à cet endroit.

Les différentes valeurs sont données pour une gaine ayant des dimensions s'avérant plus généralement comme bénéfiques à l'efficacité, c'est à dire une épaisseur en partie courante de l'ordre de 2 à 4 mm, à environ 3 mm de préférence.

Outre la facilité de mise en place permise par cette variante, celle-ci s'avère également avantageuse car favorable à l'évaporation de l'eau stagnante susceptible d'avoir pénétré entre la gaine et le conducteur.

La gaine est avantageusement positionnée de telle sorte que sa fente soit ouverte vers une autre direction que celle du bas, notamment plutôt vers le dessus du conducteur. Ainsi les bords de la fente ne reçoivent pas les gouttes ayant circulé sur la circonférence de la gaine. En d'autres termes, la gaine ne présente alors aucune géométrie susceptible de retenir localement les gouttes dans sa partie basse.

Une telle gaine 20 ouverte longitudinalement est préférentiellement réalisée par extrudage sur un tube présentant un profil d'extrusion adapté au conducteur à équiper. Une étape ultérieure d'entaillage latéral est également prévue.

Une telle gaine peut être maintenue sur le conducteur par collage ou polymérisation à froid sur celui-ci.

Les gaines présentées ci-avant se sont avérées particulièrement efficaces pour la réduction du bruit dû à l'effet couronne, cette réduction ayant été chiffrée à typiquement 15 dB lors d'essais réalisés sous une pluie fine artificielle et par mesure sonore adaptée, reflétant des conditions in situ (mesures réalisées dans un hall d'essai après arrosage et à une distance de 10 m du conducteur).

La solution est « palliative » car elle ne modifie en rien la structure de l'ouvrage (elle n'implique pas de remplacement de conducteur ou de pylône). Elle est « locale » car elle ne concerne que la zone où la nuisance est constatée : quelques dizaines de mètres dans le cas d'une habitation isolée, à quelques portées dans le cas d'un lotissement. Une « portée » est l'étendue qui sépare deux pylônes consécutifs. Elle est « durable » car son efficacité est satisfaisante pendant une période suffisante au regard de critères économiques. Au contraire le nettoyage des conducteurs peut être une solution efficace, mais pas nécessairement durable.

Il s'agit toutefois d'une solution palliative « viable » car elle présente des avantages certains.

Elle n'altère pas l'intégrité mécanique de l'ouvrage : les dispositifs ainsi fixés sur les conducteurs sont légers (i.e. <10% de la masse linéïque des conducteurs), de faible prise au vent, et ne favorisent pas la formation de manchon de givre ou de neige collante.

Elle n'altère pas la capacité de transport de l'ouvrage : les dispositifs fixés sur les conducteurs assurent un bon transfert thermique.

Elle est facile à mettre en oeuvre : l'installation est possible sans dépose des conducteurs, éventuellement en travail sous tension.

Cette solution est pérenne. Elle est effective pendant une durée suffisante au regard des critères économiques. De plus, cette solution n'augmente pas l'impact visuel de l'ouvrage.

Les inventeurs ont déterminé que afin d'obtenir un niveau d'hydrophilie approprié, il peut être souhaitable de sabler la gaine 20 après extrusion.

Selon une autre caractéristique avantageuse de l'invention afin de faciliter la mise en place et pallier les problèmes de conditionnement après fabrication, la gaine 20 est de préférence tronçonnée en segments de longueur limitée, par exemple en longueurs comprise entre 0,5m et 5m, avantageusement d'environ 1 mètre. Lors de l'installation sur conducteur "froid" il est de plus souhaitable de laisser des espaces, par exemple de l'ordre de 5 mm, entre chaque tronçon de façon à permettre une dilatation relative entre la gaine 20 et le conducteur 10 (des essais ont montré que ces espaces n'ont pas d'influence sur l'efficacité acoustique de la solution).

## Revendications

1. Dispositif de réduction de l'effet couronne d'un conducteur aérien à haute ou très haute tension, consistant en une gaine en matière plastique (20) entourant au moins partiellement ledit conducteur (10), **caractérisé en ce que** la gaine (20) est réalisée principalement en un matériau plastique dont la mouillabilité est supérieure ou égale à WC 6 selon la norme IEC TS/62073 et/ou présente une tension de surface supérieure à 60mN/m selon la norme IEC TS/62073 et/ou présente une valeur d'angle de contact au retrait (receding angle selon la norme IEC TS/62073 qui est inférieure à 10°, et **en ce que** la gaine (20) présente une ouverture latérale sous la forme d'une fente: (21), de telle sorte que la gaine (20) est mise en place sur le conducteur (10) par ouverture de cette fente (21).

2. Dispositif selon la revendication 1, **caractérisé en ce que** la gaine (20) recouvre le conducteur sur une longueur continue d'au moins 10 mètres.

3. Dispositif selon la revendication 1 ou la revendication 2, **caractérisé en ce que** la gaine (20) présente une épaisseur d'environ 3 mm, notamment entre 2 et 4 mm.

4. Dispositif selon l'une des revendications précédentes **caractérisé en ce que** la gaine (20) présente un profil transversal dont les deux extrémités libres (22, 23) adjacentes à la fente (21) sont d'une épaisseur radiale sensiblement pus importante que la partie courante de ce profil transversal.

5. Dispositif selon l'une quelconque des revendications précédentes, **caractérisé en ce que** la gaine présente un profil transversal dont les extrémités libres (22, 23) adjacentes à la fente (21) se terminent par un arrondi en direction de l'intérieur de la fente (21).

6. Dispositif selon la revendication **caractérise en ce que** le matériau constitutif de la gaine (20) est un polyamide,

7. Dispositif selon la revendication 1, **caractérisé en ce que** le matériau constitutif de la gaine (20) est un polyamide de type 6.

8. Dispositif selon la revendication 1, **caractérisé en ce que** le matériau constituant la gaine (20) est un polymère conducteur dont la mouillabilité est supérieure ou égale à WC 6 selon la norme IEC TS/62073 et/ou présente une tension de surface supérieure à 60mN/m, et/ou présente une valeur d'angle de contact au retrait (receding angle) qui est inférieure à 10°.

9. Dispositif selon l'une quelconque des revendications précédentes, **caractérisé en ce que** le matériau constitutif de la gaine (20) inclut des particules de matériau conducteur.

10. Dispositif selon l'une quelconque des revendications précédentes, **caractérisé en ce que** la gaine (20) présente un état de surface lisse.

11. Dispositif selon l'une des revendications 1 à 10, **caractérisé en ce que** la gaine (20) est réalisée par extrusion.

12. Dispositif selon la revendication 11, **caractérisé en ce que** la gaine (20) est sablée après extrusion.

13. Dispositif selon l'une des revendications 1 à 12, **caractérisé en ce que** la gaine (20) est tronçonnée en segments de longueur comprise entre 0,5m et 5m, avantageusement de l'ordre de 1m.

## Claims

1. Device for reducing the corona effect of a high or very high overhead power line, consisting of a sleeve made of plastic material (20) surrounding at least partially said power line (10), **characterised in that** the sleeve (20) is primarily made of a plastic material for which the wettability is greater than or equal to WC 6 according to the IEC TS/62073 standard and/or has a surface tension greater than 60mN/m according to the IEC TS/62073 standard and/or has a receding angle value according to the IEC TS/62073 standard which is less than 10°, and **in that** the sleeve (20) has a lateral opening in the form of a slit (21), in such a way that the sleeve (20) is installed on the power line (10) by opening this slit (21).

2. Device according to claim 1, **characterised in that** the sleeve (20) covers the power line over a continuous length of at least 10 metres.

3. Device according to claim 1 or claim 2, **characterised in that** the sleeve (20) has a thickness of approximately 3 mm, in particular between 2 and 4 mm.

4. Device according to one of the preceding claims **characterised in that** the cross-section of the sleeve (20) has two free ends (22, 23) adjacent to the slit (21) are of a radial thickness substantially higher than the running portion of this cross-section.

5. Device as claimed in any preceding claim, **characterised in that** the cross-section of the sleeve has two free ends (22, 23) adjacent to the slit (21) are terminated by a rounded edge in the direction of the interior of the slit (21).

6. Device according to claim 1, **characterised in that** the material of the sleeve (20) is a polyamide.

7. Device according to claim 1, **characterised in that** the material of the sleeve (20) is a polyamide 6.

8. Device according to claim 1, **characterised in that** the material of the sleeve (20) is a conducting polymer for which the wettability is greater than or equal to WC 6 according to the IEC TS/62073 standard and/or has a surface tension greater than 60mN/m, and/or has a receding angle value which is less than 10°.

9. Device as claimed in any preceding claim, **characterised in that** the material of the sleeve (20) includes particles of conducting material.

10. Device as claimed in any preceding claim, **characterised in that** the sleeve (20) has a smooth surface condition.

11. Device according to one of claims 1 to 10, **characterised in that** the sleeve (20) is made by extrusion.

12. Device according to claim 11, **characterised in that** the sleeve (20) is sandblasted after extrusion.

13. Device according to one of claims 1 to 12, **characterised in that** the sleeve (20) is cut into sections of a length between 0.5m and 5m, advantageously of about 1m.

## Patentansprüche

1. Vorrichtung zur Verringerung des Koronaeffekts eines oberirdischen Hochspannungs- oder Höchstspannungsleiters, wobei die Vorrichtung aufweist: eine Hülle (20) aus Plastikmaterial, die den Leiter zumindest teilweise umgibt, **dadurch gekennzeichnet, dass** die Hülle (20) hauptsächlich aus einem Plastikmaterial ausgebildet ist, dessen Benetzbarkeit größer oder gleich WC 6 gemäß der Norm IEC TS/62073 ist und/oder das eine Oberflächenspannung aufweist, die größer als 60mN/m gemäß der Norm IEC TS/62073 ist, und/oder das einen Wert eines Kontaktwinkels als Rückzugswinkel (receding angle) gemäß der Norm IEC TS/62073 aufweist, der kleiner als 10° ist, und dass die Hülle (20) eine seitliche Öffnung in Form eines Schlitzes aufweist, so dass die Hülle (20) an dem Leiter (10) über die Öffnung des Schlitzes (21) installiert wird.

2. Vorrichtung gemäß Anspruch 1, **dadurch gekennzeichnet, dass** die Hülle (20) den Leiter über eine kontinuierliche Länge von zumindest 10 Metern umhüllt.

3. Vorrichtung gemäß Anspruch 1 oder 2, **dadurch gekennzeichnet, dass** die Hülle (20) eine Dicke von ca. 3 mm, insbesondere zwischen 2 und 4 mm, aufweist.

4. Vorrichtung gemäß einem der vorangehenden Ansprüche, **dadurch gekennzeichnet, dass** die Hülle (20) einen Querschnitt aufweist, dessen zwei freie an dem Schlitz (21) angrenzende Enden (22, 23) eine radiale Dicke aufweisen, die deutlich größer als der normale Teil des Querschnitts ist.

5. Vorrichtung gemäß einem der vorangehenden Ansprüche, **dadurch gekennzeichnet, dass** die Hülle einen Querschnitt aufweist, dessen freie an dem Schlitz (21) angrenzenden Enden (22, 23) durch eine in Richtung des Inneren des Schlitzes (21) weisenden Abrundung abschließen.

6. Vorrichtung gemäß Anspruch 1, **dadurch gekennzeichnet, dass** das die Hülle (20) ausbildende Material ein Polyamid ist.

7. Vorrichtung gemäß Anspruch 1, **dadurch gekennzeichnet, dass** das die Hülle (20) ausbildende Material ein Polyamid-6 ist.

8. Vorrichtung gemäß Anspruch 1, **dadurch gekennzeichnet, dass** das die Hülle (20) ausbildende Material ein Polymerleiter ist, dessen Benetzbarkeit größer oder gleich WC 6 gemäß der Norm IEC TS/62073 ist und/oder der eine Oberflächenspannung aufweist, die größer als 60 mN/m ist, und/oder der einen Wert eines Kontaktwinkels als Rückzugswinkel (receding angle) aufweist, der kleiner als 10° ist.

9. Vorrichtung gemäß einem der vorangehenden Ansprüche, **dadurch gekennzeichnet, dass** das die Hülle (20) ausbildende Material Partikel aus einem Leitermaterial umfasst.

10. Vorrichtung gemäß einem der vorangehenden Ansprüche, **dadurch gekennzeichnet, dass** die Hülle (20) einen oberflächengeglätteten Zustand aufweist.

11. Vorrichtung gemäß einem der Ansprüche 1 bis 10, **dadurch gekennzeichnet, dass** die Hülle (20) durch Extrusion verwirklicht wird.

12. Vorrichtung gemäß Anspruch 11, **dadurch gekennzeichnet, dass** die Hülle (20) nach der Extrusion einer Sandstrahlung unterzogen wird.

13. Vorrichtung gemäß einem der Ansprüche 1 bis 12, **dadurch gekennzeichnet, dass** die Hülle (20) in Abschnitte mit einer Länge zwischen 0,5m und 5m, vorteilhafterweise in der Größenordnung von 1m, geschnitten wird.
